# EUROPÄISCHE PATENTSCHRIFT

(11) **EP 0 574 592 B1**
(45) Veröffentlichungstag und Bekanntmachung des Hinweises auf die Patenterteilung: **16.03.1994**
(21) Anmeldenummer: 92106497.8
(22) Anmeldetag: 15.04.1992
(51) Int. Cl.: B21C 33/00

(54) **Vorrichtung zum Laden von Blöcken und gegebenenfalls Pressscheiben in eine liegende Metallstranggpresse**
Apparatus for loading billets and eventually pressing discs in horizontal metal extrusion presses
Appareil pour le chargement des bilettes et éventuellement des disques de poussée dans des presses horizontales d'extrusion de métaux

(43) Veröffentlichungstag der Anmeldung: 22.12.1993
(73) Patentinhaber: SMS Hasenclever GmbH, D-40035 Düsseldorf (DE)
(72) Erfinder: Richardt, Urban, W-4020 Mettmann 1 (DE); Jakoby, Nikolaus, W-4030 Ratingen 1 (DE); Ahrweiler, Josef, W-4020 Mettmann 1 (DE)
(74) Vertreter: Pollmeier, Felix, Dipl.-Ing.

(56) Entgegenhaltungen:
- DE-C- 636 744
- DE-C- 3 938 790
- FR-A- 1 566 602
- US-A- 2 919 039

## Beschreibung

Die in einer Metallstrangpresse zur Verpressung kommenden Blöcke werden durch eine schalen- oder zangenartige Vorrichtung in die Preßachse eingebracht und dann in die Bohrung des Aufnehmers verbracht, d.h. eingeschoben, falls nicht der Aufnehmer über den Block gestülpt wird. Das Einschieben erfolgt zumeist mittels des Preßstempels, wenn dieser in seine Ausgangsposition zum Preßvorgang einfährt, der damit beginnt, daß der Block gestaucht wird, um die Bohrung des Aufnehmers im Durchmesser voll auszufüllen, denn es ist erforderlich, daß der einzubringende Block von geringerem Durchmesser ist als die Bohrung des Aufnehmers. Je größer das Spiel des Blocks in der Aufnehmerbohrung ist, um so mehr verkürzt sich der Block durch das Stauchen und um so mehr geht an nutzbarer Länge der Aufnehmerbohrung verloren. Der Verlust liegt in einer Größenordnung von 4 bis 10%. Daher ist man bestrebt, das Spiel des Blocks in der Aufnehmerbohrung gering zu halten, um einen hohen Nutzungsgrad der Strangpresse zu erreichen. Je nach der Beschaffenheit und dem Durchmesser/ Längen-Verhältnis der zur Verpressung gelangenden Blöcke, wenn diese eine nicht tolerierbare Krümmung aufweisen, führt ein geringes Spiel des Blocks in der Aufnehmerbohrung zum Klemmen des Blocks. Erfolgt das Einschieben des Blocks in die Aufnehmerbohrung mittels des in seiner Preßkraft nur unzureichend feinfühlig einstellbaren Preßstempels, so führt das Festklemmen des Blocks zu einer pilzförmigen Aufstauchung des sich noch außerhalb der Aufnehmerbohrung befindlichen Blockteils und die Entfernung des so aufgestauchten und festgeklemmten Blocks aus der Strangpresse bedingt eine längere Betriebsunterbrechung.

Um ein Festklemmen des Blocks in der Aufnehmerbohrung mit Pilzbildung am freien Blockende auszuschließen, wird eine Kolben-Zylinder-Einheit als Blockeinstoßer vorgesehen, deren Schubkraft so begrenzt und feinfühlig einstellbar ist, daß es zu keinem Festklemmen des Blocks in der Aufnehmerbohrung kommen kann, da ausgelöst durch einen übermäßigen Druckanstieg am Blockeinstoßer dieser abgeschaltet wird.

Entsprechend der aus der DE-AS 22 29 738 bekannten Anordnung ist die Kolben-Zylinder-Einheit des Blockeinstoßers hierbei im hohlen Hauptpreßkolben angeordnet, und an der mit dem Preßkolben verbundenen Traverse ist der Preßstempel von einem Schieber aus der Pressenachse verfahrbar, so daß der Kolben des Blockeinstoßers durch eine Bohrung im Schieber wirken kann. Abgesehen davon, daß sich diese Anordnung für eine Hohlstrangpresse mit Lochvorrichtung verbietet, bedingt das Aus- und Einfahren des Preßstempels sowie der zwischengeschaltete Vor- und Rücklauf des Blockeinstoßers einen den Arbeitstakt der Presse erheblich beeinträchtigenden Zeitverlust.

Nach der US-A 2 919 039 ist als Blockeinstoßer ein in dem die Ladeschale des Blockladers tragenden Schwenkarm gelagerter Hebel vorgesehen, der von der Kolben-Zylinder-Einheit geschwenkt wird und dessen freies Ende zum Einstoßen des Blockes in den Aufnehmer die Ladeschale ihrer Länge nach durchfährt. Dieser Blocklader entspricht in verschiedener Hinsicht nicht den in 30 Jahren gewachsenen Anforderungen, insbesondere nicht hinsichtlich der Einsatzmöglichkeit für unterschiedliche Blocklängen und gewünschter Minimierung von Taktzeiten im Preßzyklus.

Die Aufgabe der Erfindung besteht darin, den Blocklader nach der US-A 2 919 039 mit der Anpassung an die gewachsenen Anforderungen baulich zu vereinfachen und zu verbessern.

Diese Aufgabe wird erfindungsgemäß dadurch gelöst, daß - wie aus der DE-C 39 38 790 bekannt - Ladeschale und Tragarm (Schwenkarm) geteilt sind und der dem Aufnehmer ferner gelegene Ladeschalen-Tragarmteil gegenüber dem dem Aufnehmer näher gelegenen Teil auf diesen zu axial verschiebbar angeordnet und mit einem Verschiebeantrieb versehen ist, und daß dabei der zum Einschieben des Blocks in die Aufnehmerbohrung vorgesehene Stößel mit Antrieb in dem dem Aufnehmer abgewandten Ladeschalen- und Tragarmteil gelagert und für einen um den zwischen den Ladeschalen- und Tragarmteilen vorgesehenen Verschiebeweg gegenüber dem maximalen Ladehub verringerten Hub bemessen ist. Außer dem baulichen Vorteil des geringen Raumbedarfs eines Stößelantriebs kleineren Hubes läßt sich auch mit geringem Aufwand eine höhere Einschubgeschwindigkeit erreichen.

Ein besonders kleiner Hub des Stößelantriebs läßt sich erreichen, wenn - wie aus der DE-C 39 38 790 ebenfalls bekannt - gabelartig ausgebildete Ladeschalenteile mit gegeneinander versetzten Zinken und Lücken vorgesehen werden, bei denen die Zinken des einen den Lücken zwischen den Zinken des anderen Ladeschalenteils gegenüberstehen, und wobei der Hub des Stößels des Blockeinschiebers etwa gleich dem Verschiebeweg des mit dem Stößel versehenen Ladeschalenteils gegenüber dem unverschiebbaren Ladeschalenteil bemessen ist.

Für die Ausbildung der Stößel und ihrer Verschiebeantriebe sowie deren Anordnung und Befestigung an den Tragarmteilen sieht die Erfindung verschiedene Lösungen vor, um insbesondere Unterschiede wie die Ausbildung der Tragarme hinsichtlich ihrer Beweglichkeit in einer Radialebene zur Pressenachse z.B. als Schwenkarm oder als radial in der Horizontalen oder einer geneigten Bahn beweglicher Schlitten, Rechnung zu tragen.

Eine dieser Lösungen besteht darin, die Tragarm- und Ladeschalenteile zur Pressenachse hin zu gabeln, so daß die Gabelöffnung in Ausbildung und Bemessung geeignet sind, den Stößel mit seinem Verschiebeantrieb und unter Berücksichtigung des Stößelhubes aufzunehmen. Diese Lösung empfiehlt sich insbesondere für einen in einer Horizontalen radial zur Pressenachse beweglichen Tragarm, für den es sich empfiehlt, die Ladeschalenteile als zwei schwenkbewegliche Sektoren auszubilden.

Wenn der Tragarm als Schwenkarm oder als in einer geneigten Bahn beweglicher Schlitten ausgebildet ist, genügt es, von den Ladeschalenteilen nur einen Sektor schwenkbeweglich vorzusehen, und dementsprechend ist ein Sektor der Ladeschalenteile mit den Tragarmteilen fest verbunden, während der zweite, schwenkbewegliche Sektor der Ladeschalenteile und der Stößel mit Verschiebeantrieb an gegenüberliegenden Seiten der Tragarmteile angeordnet sind. Hierbei kann als Stößel der Shuttle einer kolbenstangenlosen Kolben-Zylinder-Einheit mit längsgeschlitztem an ihrem Tragarmteil befestigten Zylinder dienen. Es kann als Stößel auch ein mit einer Kröpfung in den Verschiebebereich des Blocks reichender, an seinem Tragarmteil schwenkbar gelagerter Hebel dienen.

In weiterer Vereinfachung kann die Stößelbewegung von der Verschiebebewegung des einen gegenüber dem anderen Ladeschalen- und Tragarmteil durch einen Koppeltrieb zwischen dem Antrieb des Stößels und dem unverschiebbaren Ladeschalen- und Tragarmteil abgeleitet sein.

In den Zeichnungen sind Ausführungsbeispiele der Erfindung dargestellt.

Ein erstes Ausführungsbeispiel zeigt die
- Fig. 1: in einer Aufsicht, die
- Fig. 2: in einer Seitenansicht in Richtung der Pressenachse und die
- Fig. 3 und 4: in unterschiedlichen Betriebsstellungen im Ausschnitt zur Fig. 1 in größerem Maßstab, wobei die Fig. 3 durch Seitenansichten von links und rechts in den
- Fig. 3L und 3R: ergänzt ist.

Ein zweites Ausführungsbeispiel zeigt die
- Fig. 5: in einer Seitenansicht quer zur Pressenachse, die
- Fig. 6: in einer Seitenansicht in Richtung der Pressenachse und die
- Fig.7 und 8: in unterschiedlichen Betriebsstellungen im Ausschnitt zur Fig. 5 in größerem Maßstab.

Ein drittes Ausführungsbeispiel zeigt die
- Fig. 9: in einer Seitenansicht in Richtung der Pressenachse und die
- Fig.10 u.11: in unterschiedlichen Betriebsstellungen in einer Ansicht in der in Fig. 9 durch den Pfeil "X" belegten Richtung.

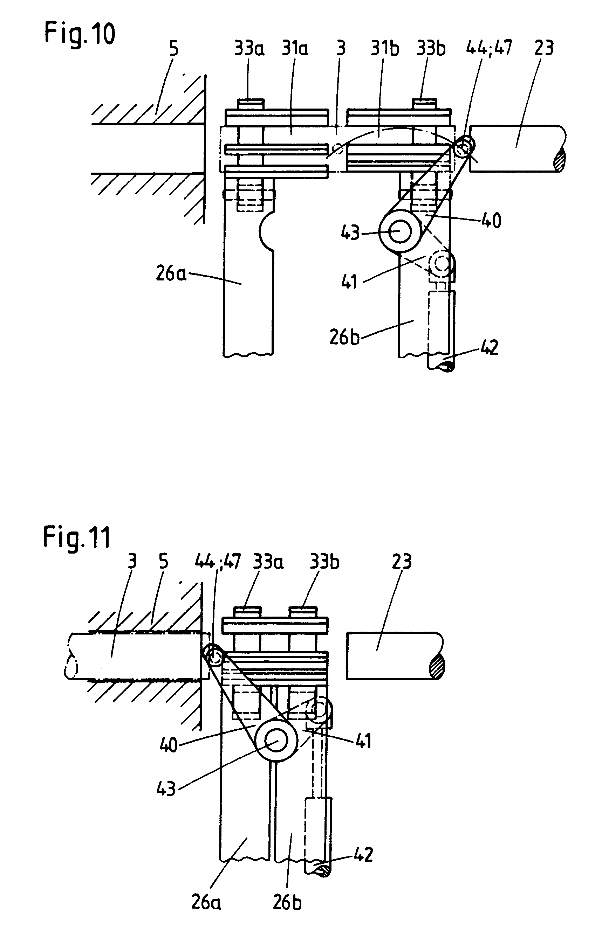

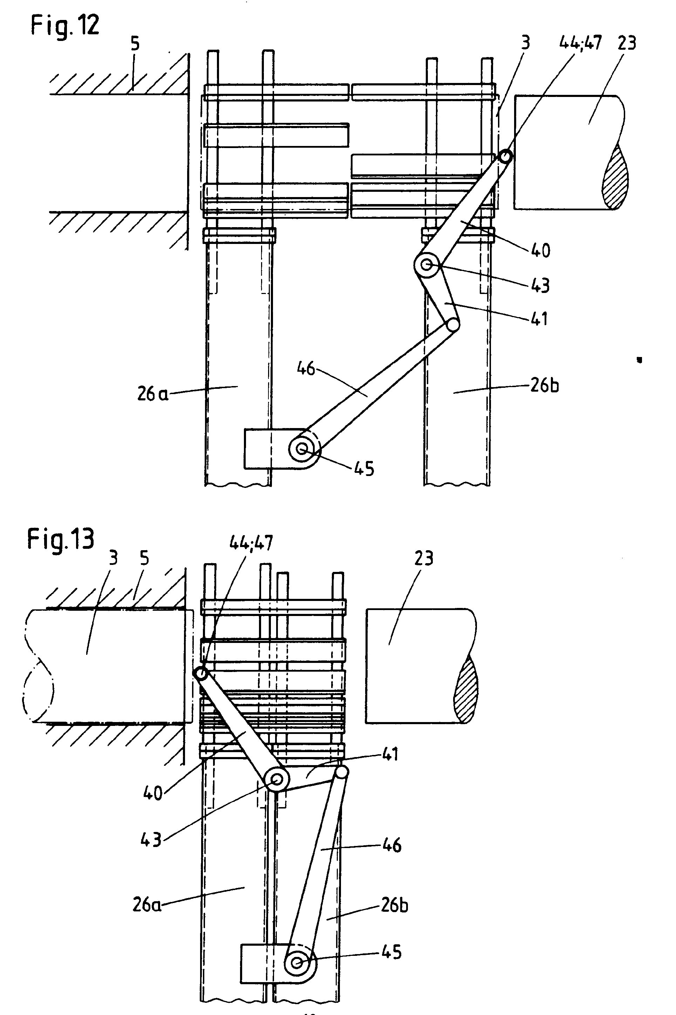

Eine Abwandlung des dritten Ausführungsbeispiels zeigen die Fig. 12 u. 13 in den Fig. 10 u. 11 entsprechenden Ansichten.

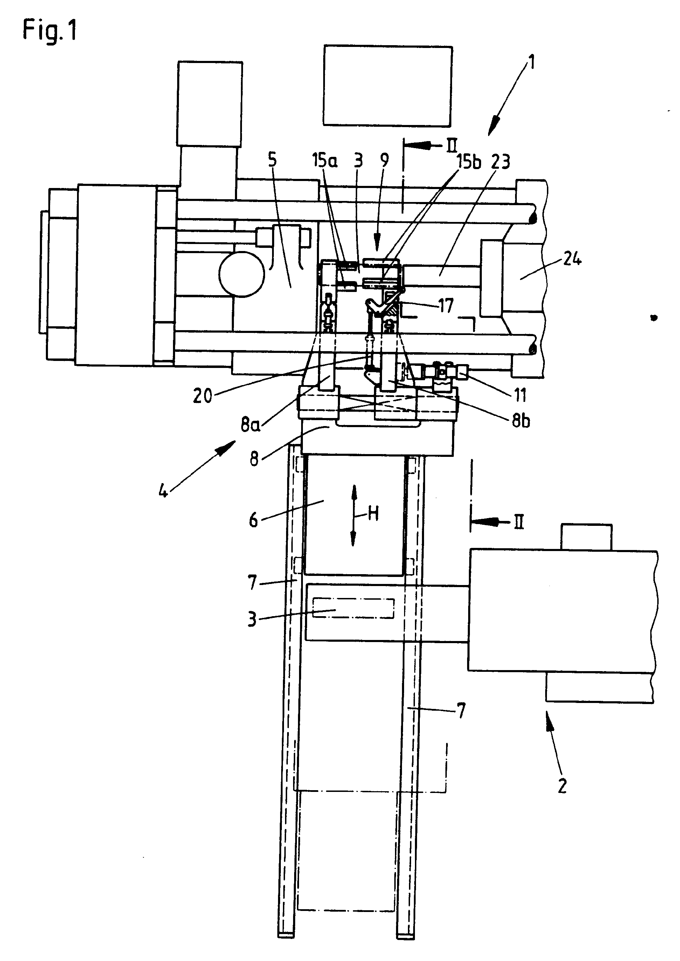

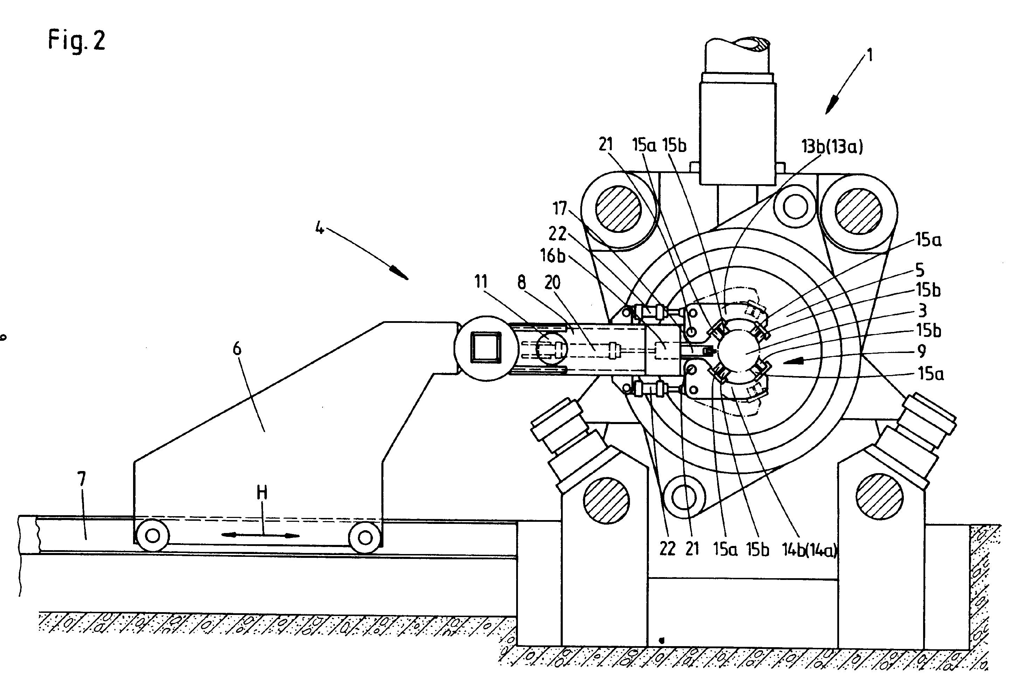

In den Fig. 1 und 2 ist eine Strangpressanlage in einem Ausschnitt dargestellt, die aus einer Strangpresse 1, einem Ofen 2 zur Erwärmung der in der Strangpresse 1 zur Verpressung gelangenden Blöcke 3 und einem Blocklader 4 besteht. In der korrespondierenden Stellung des Blockladers 4 zum Ofen 2 übernimmt der Blocklader 4 einen Block 3; so dann verfährt der Blocklader 4 in seine mit der Strangpresse 1 korrespondierende Stellung, wobei der aufgenommene Block 3 in die Preßachse der Strangpresse 1 eingebracht wird, wo sich der Block 3 gleichachsig zur Bohrung eines Aufnehmers 5 der Strangpresse 1 befindet. Der Blocklader 4 besteht aus einem Schlitten bzw. Wagen 6, der in horizontalen Führungen 7 quer zur Preßachse in Richtung des Pfeils "H" verfahrbar und dazu mit einem geeigneten Fahrantrieb versehen ist. Der Schlitten oder Wagen 6 ist mit einem Arm 8 versehen, mit dem er eine den Block 3 umfassende, somit eine Hülse bildende Ladeschale 9 trägt. Die Ausbildung der Ladeschale 9 als den Block 3 umfassende Hülse läßt eine schnelle Bewegung mit kurzen Anfahr- und Bremswegen des Schlittens oder Wagens 6 und entsprechend kurze Nebenzeiten zu, da der Block 3 sicher gehalten ist.

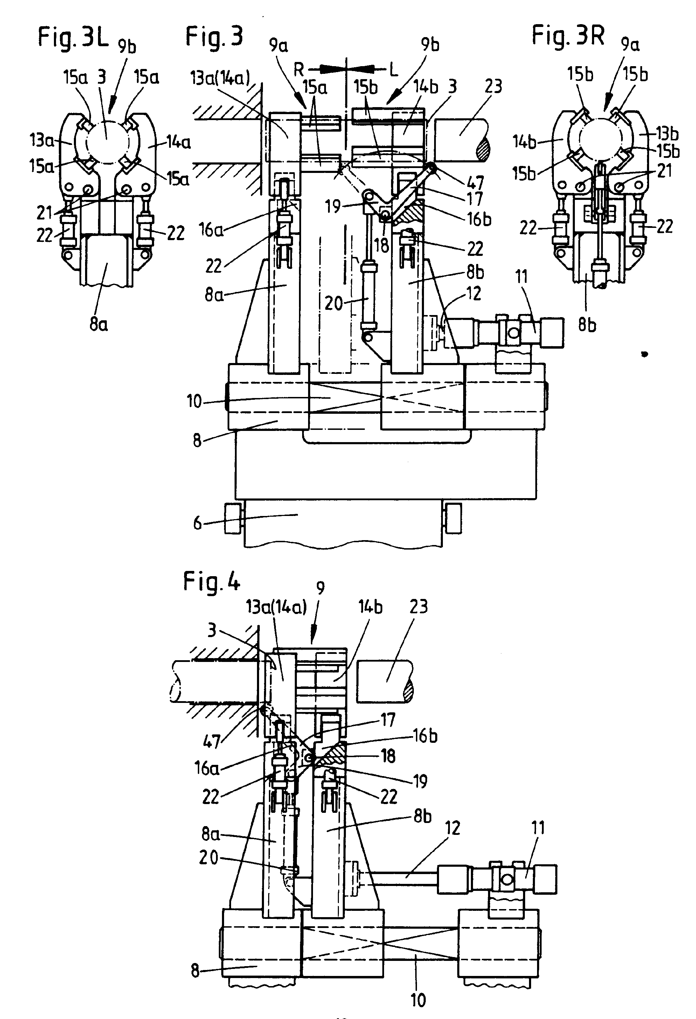

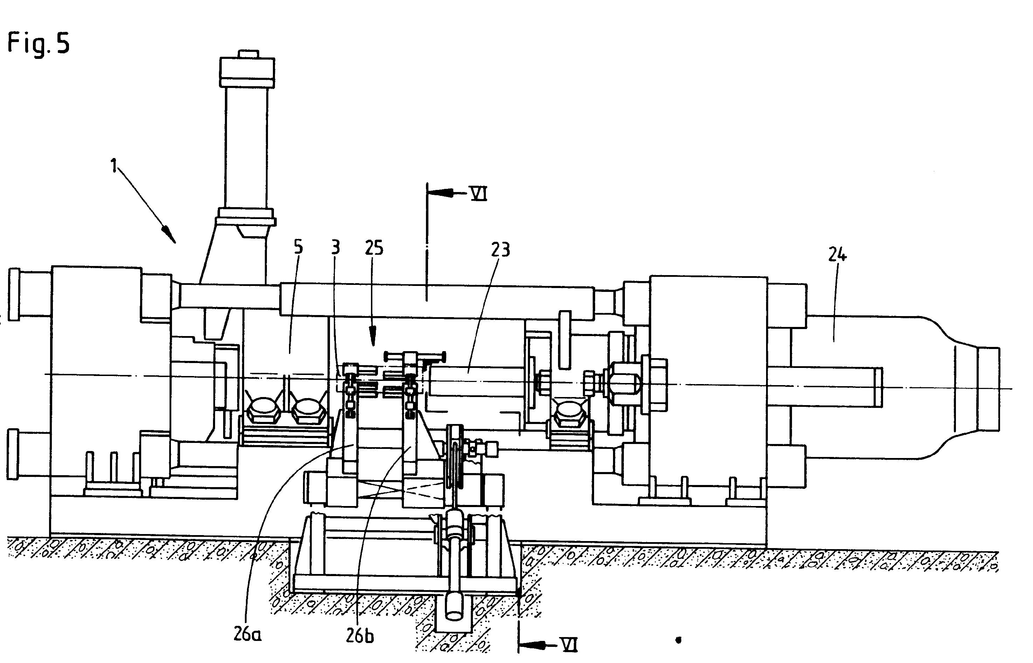

Wie insbesondere die Fig. 3 und 4 erkennen lassen, ist der Arm 8 des Blockladers 4 zweigeteilt in einen Armteil 8a und einen Armteil 8b, wobei der Armteil 8a als Verlängerung des Arms 8 fest mit diesem verbunden ist, während der Armteil 8b entlang einem vierkantigen Führungsholm 10 zwischen der in Fig. 3 und der in Fig. 4 dargestellten Endlage achsial verschiebbar ist, wozu eine Kolben-Zylinder-Einheit 11, die an dem Arm 8 befestigt ist, über ihre Kolbenstange 12 auf den Armteil 8b einwirkt. Die Ladeschale 9 ist ebenfalls zweigeteilt und besteht aus Jochstücken 13a, 13b, 14a, 14b, wobei die Jochstücke 13a, 14a des Armteils 8a mit Zinken 15a den Ladeschalenteil 9a und die Jochstücke 13b, 14b des Armteils 8b mit Zinken 15b den Ladeschalenteil 9b bilden. Die Zinken 15a sind gegenüber den Zinken 15b so versetzt, daß die einen jeweils in die Lücken zwischen den anderen greifen, wenn der Armteil 8b auf den Armteil 8a zu verschoben wird. Die Armteile 8a und 8b sind an ihren den Ladeschalenteilen 9a und 9b zugekehrten Enden gegabelt, wobei die Gabelungen 16a und 16b so bemessen sind, daß sie einem Stößel 17, der um eine Achse 18 im Armteil 8b schwenkbar gelagert ist, über seinen gesamten Schwenkbereich unter Einschluß des Verschiebebereichs des Armteils 8b gegenüber dem Armteil 8a Platz bieten. Der Stößel 17 ist als Winkelhebel ausgebildet, an dessen abgewinkelten Hebelarm 19 eine Kolben-Zylinder-Einheit 20 angreift, mittels der der Stößel 17 schwenkbar ist. Die Jochstücke 13a und 14a sind an dem Armteil 8a und die Jochstücke 13b und 14b sind an dem Armteil 8b um Achsen 21 mittels Kolben-Zylinder-Einheiten 22 schwenkbar, wobei in der eingeschwenkten Stellung die Jochstücke 13a, 14a, 13b und 14b mit den an ihnen befestigten Zinken 15a und 15b die einen Block 3 mit Spiel umfassende, aber nicht klemmende Hülse bilden. In ausgeschwenkter Stellung der Jochstücke 13a, 14a, 13b und 14b - dargestellt in Fig. 2 in strichpunktierten Linien - besteht eine Öffnung der Hülse, so daß ein horizontales Ausfahren der Ladeschale 9 bzw. der Ladeschalenteile 9a und 9b auch dann möglich ist, wenn sich das Ende eines Blocks 3 noch oder der Preßstempel 23 der Strangpresse 1 schon im Bereich der Ladeschale 9 befindet. Dies trägt zur Verkürzung der Nebenzeiten des Preßvorgangs bei, da sich die Operationen "Einschieben eines Blocks 3", "Ausfahren des Blockladers 4" und "Einfahren des Preßstempels 23 in die Aufnehmerbohrung" überschneiden können, wobei lediglich darauf zu achten ist, daß der dem Stößel 17 nachlaufende Preßstempel 23 diesem in einem Abstand folgt, daß bei Abschaltung des Stößelvorschubs infolge eines klemmenden Blocks 3, der in seiner Abschaltung trägere Preßstempelvorschub zu keiner Kollision von Preßstempel 23 und Stößel 17 führt.

Der Arbeitsablauf des Blockladens ist folgender: Sobald der mit einem Block 3 aus dem Ofen 2 beladene Blocklader 4 in seine mit der Strangpresse 1 korrespondierende Stellung eingefahren ist, in der sich der Block 3 achsgleich zur Bohrung des Aufnehmers 5 befindet, werden die Kolben der Kolben-Zylinder-Einheiten 11 und 20 gleichzeitig beaufschlagt, so daß der Tragarmteil 8b auf den Tragarmteil 8a zu bewegt und der Stößel 17 auf den Blockaufnehmer 5 zu geschwenkt wird. Beide Bewegungen addieren sich zur Bewegung des Blocks 3 mit der dieser in die Bohrung des Aufnehmers 5 einfährt. Die Beaufschlagung des Preßkolbens im Preßzylinder 24 erfolgt zeitlich so versetzt, daß der Preßstempel 23 dem den Block 3 vorschiebenden Stößel 17 mit vorbestimmten Mindestabstand folgt. Sobald der Tragarmteil 8b sich dem Tragarmteil 8a genähert hat und der Stößel 17 seinen Schwenkweg beendet hat - diese Situation ist in Fig. 4 dargestellt - werden die Kolben-Zylinder-Einheiten 22 beaufschlagt und damit die Jochstücke 13a, 14a, 13b und 14b geschwenkt. Die dann geöffnete Ladeschale 9 in deren Ladeschalenteilen 9a und 9b läßt sich nunmehr horizontal verfahren in ihre zweite mit dem Ofen 2 korrespondierende Stellung, in der sie für den folgenden Preßvorgang mit einem folgenden Block 3 beladen wird. Über die Kolben-Zylinder-Einheit 20 ist die vom Stößel 17 auf den Block 3 ausgeübte Vorschubkraft so begrenzt, daß die übliche, beim Einschieben des Blocks 3 in die Bohrung des Aufnehmers 5 auftretende Reibung überwunden wird. Steigt der Widerstand darüberhinaus, wird das Einschieben des Blocks 3 abgebrochen und ebenso der Vorschub des Preßstempels 23. Der durch die Begrenzung der Vorschubkraft noch nicht festgeklemmte Block 3 läßt sich noch leicht entfernen, so daß der Preßbetrieb bald mit einem neuen Block 3 fortgesetzt werden kann.

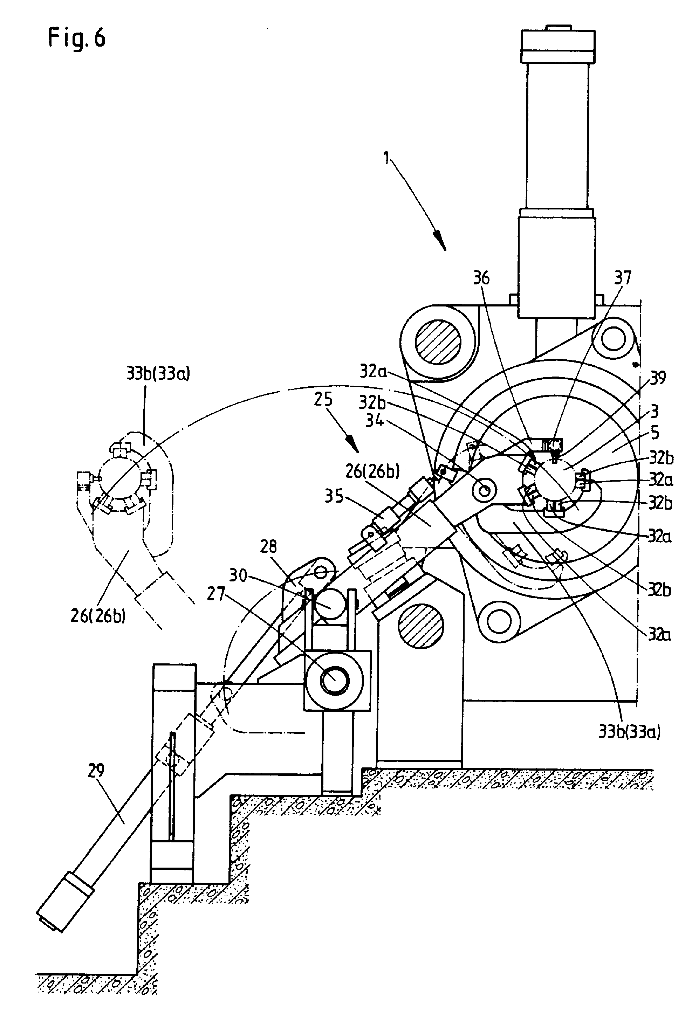

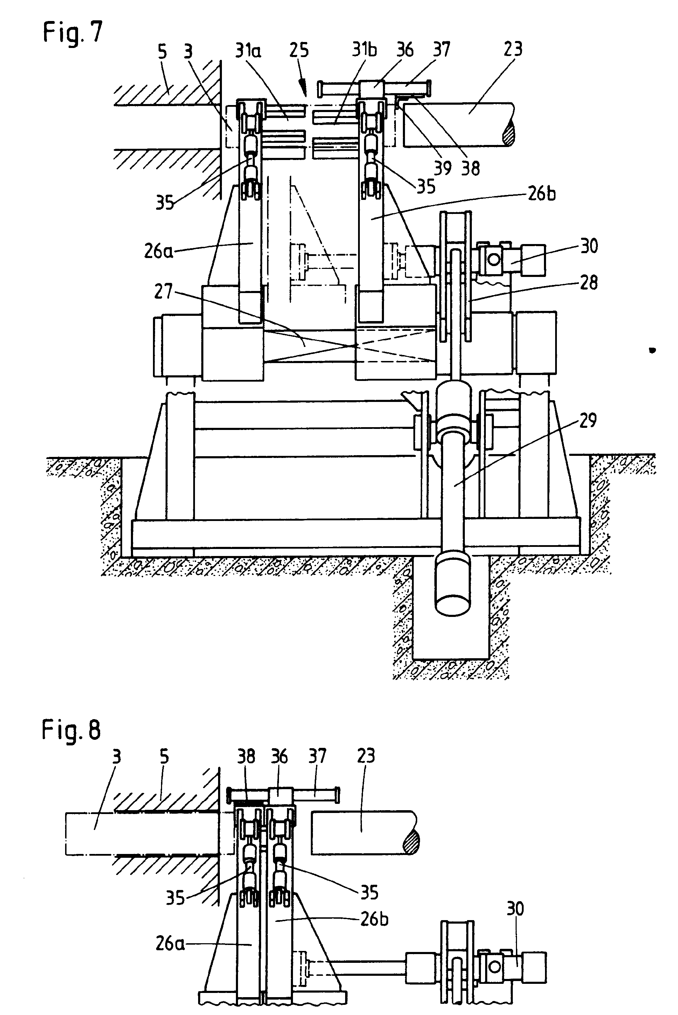

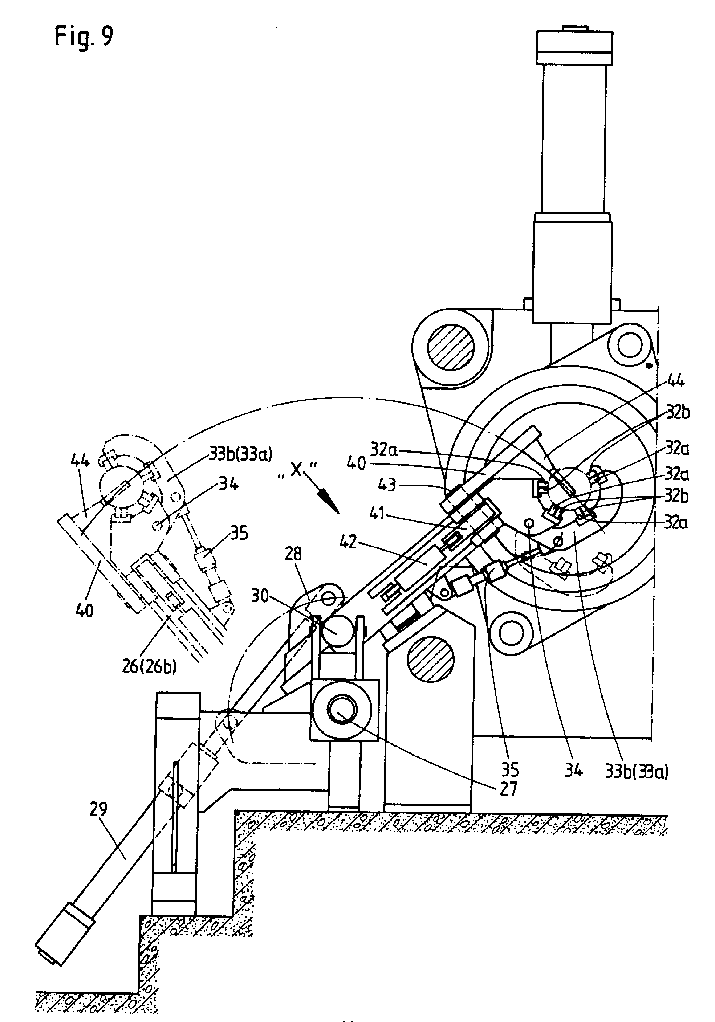

Bei dem in den Fig. 5 bis 8 dargestellten Ausführungsbeispiel ist die Ladeschale 31 des Blockladers 25 von einem in einer Radialebene zur Preßachse beweglichen Schwenkarm 26 getragen. Der Schwenkarm 26 ist geteilt in einen Schwenkarmteil 26a, der fest mit einer Welle 27 verbunden ist, und einen Schwenkarmteil 26b, der drehfest mit der Welle 27 verbunden, aber auf dieser achsialverschiebbar ist. Zur Schwenkung der Welle 27 ist diese mit einem Hebel 28 verbunden, an den eine Kolben-Zylinder-Einheit 29 angreift. Die achsiale Verstellung des Schwenkarmteils 26b zum Schwenkarmteil 26a erfolgt durch eine Kolben-Zylinder-Einheit 30. Die Schwenkarmteile 26a und 26b tragen Teile 31a und 31b der Ladeschale 31 , wobei die Ladeschalenteile 31a, 31b von Zinken 32a bzw. 32b gebildet sind, die eine den Block 3 umfassende Hülse bilden. Dabei ist ein Teil der Zinken 32a, 32b fest mit den Schwenkarmteilen 26a bzw. 26b verbunden, während der andere Teil der Zinken 32a, 32b von einem Jochstück 33a bzw. 33b getragen ist. Das Jochstück 33a ist an dem Schwenkarmteil 26a und das Jochstück 33b ist an dem Schwenkarmteil 26b um Achsen 34 mittels je einer Kolben-Zylinder-Einheit 35 schwenkbar, wobei die Zinken 32a mit dem Jochstück 33a und die Zinken 32b mit dem Jochstück 33b je einen Sektor der die Ladeschalenteile 31a und 31b bildenden Hülse ergeben, so daß durch verschwenken der Jochstücke 33a und 33b die die Ladeschale 31 bildende Hülse sektoriell geöffnet werden kann. An einem Ausleger 36 zum Schwenkarmteil 26b ist eine kolbenstangenlose Kolben-Zylinder-Einheit 37 befestigt, deren Shuttle 38 einen Stößel 39 trägt und zum Einschieben eines Blocks 3 in die Bohrung des Aufnehmers 5 bewegt. Gleichzeitig mit dem Kolben der Kolben-Zylinder-Einheit 37 wird auch der Kolben der Kolben-Zylinder-Einheit 30 beaufschlagt und somit der Schwenkarmteil 26b von der in der Fig. 7 dargestellten Stellung auf den Schwenkarmteil 26a zu in die in Fig.8 dargestellte Stellung bewegt. Die Zinken 32b, die versetzt zu den Zinken 32a angeordnet sind, treten dabei in die Lücken zwischen den Zinken 32a und umgekehrt die Zinken 32a in die Lücken zwischen den Zinken 32b ein. Die Arbeitsabläufe des Blockladens mit dem Blocklader des Ausführungsbeispiels nach den Fig. 5 bis 8 und dem Blocklader des Ausführungsbeispiels nach den Fig. 1 bis 4 sind einander entsprechend.

Das in den Fig. 9 bis 11 dargestellte Ausführungsbeispiel entspricht in wesentlichen Teilen dem Ausführungsbeispiel nach den Fig. 5 bis 8 und soweit ist auf die Beschreibung dieses Ausführungsbeispiels, deren Bezugszeichen übernommen sind, verwiesen. Unterschiedlich ist die Ausbildung des Stößels mit seinem Antrieb. Als Stößel 40 ist bei diesem Ausführungsbeispiel wiederum ein Winkelhebel vorgesehen, an dessen abgewinkelten Hebelarm 41 eine Kolben-Zylinder-Einheit 42 angreift, mittels der der Stößel 40 um eine Achse 43 schwenkbar ist. Der Stößel 40 mit seinem abgewinkelten Hebelarm 41, der Achse 43 und der Kolben-Zylinder-Einheit 42 sind mit dem achsialverschiebbaren Schwenkarmteil 26b verbunden bzw. an diesen angelenkt, so daß der Schwenkweg des Stößels 40 um den Verschiebeweg des Schwenkarmteils 26b kürzer als der zum Einschieben des Blocks 3 benötigte Weg sein kann. Der Stößel 40 ist mit einer Kröpfung 44 versehen, mit der er in den Verschiebebereich des Blocks 3 reicht. Die Anordnung des Stößels 40 ist auf einer und die Anordnung des Jochstücks 33b mit zugehöriger Kolben-Zylinder-Einheit 35 ist auf der anderen, gegenüberliegenden Seite des Schwenkarmteils 26b vorgesehen, bei entsprechender Anordnung des Jochstücks 33a mit zugehöriger Kolben-Zylinder-Einheit 35 am Schwenkarmteil 26a.

Eine Abwandlung des Ausführungsbeispiels nach den Fig. 9 bis 11 zeigen die den Fig. 10 und 11 entsprechenden Fig. 12 und 13. Die Abwandlung besteht darin, daß anstelle der Kolben-Zylinder-Einheit 42 der Stößel 40 durch eine an den Schwenkarmteil 26a bei 45 angelenkte und mit dem abgewinkelten Hebelarm 41 zum Stößel 40 verbundenen Koppel 46 schwenkgetrieben ist, also seine Schwenkbewegung von der Verschiebebewegung des einen Schwenkarmteils 26b gegenüber dem anderen Schwenkarmteil 26a abgeleitet ist.

Die Stößel 17 sowie 40 mit Kröpfung 44 sind an ihren auf den Block 3 einwirkenden Enden mit den Block 3 kontaktierenden Druckrollen 47 versehen.

## Patentansprüche

1. Vorrichtung zum Laden von Blöcken (3) in liegende Metallstrangpressen, mit einer von einem beweglichen Arm (8,26) getragenen Ladeschale (9,31), mit der ein zu verpressener Block (3) von einer Ladestation (Ofen 2) in die Preßachse zwischen Aufnehmer (5) und Preßstempel (23) oder Matrizenstempel einbringbar ist, und einem den Block (3) in die Aufnehmerbohrung einschiebenden und einschließlich seines Verschiebeantriebs (20;37;42;46) im Tragarm (8;26) gelagerten Stößels (17;39;40;44),
**dadurch** **gekennzeichnet**,
daß Ladeschale (9;31) und Tragarm (8;26) geteilt sind, der dem Aufnehmer (5) ferner gelegene Ladeschalen (9b;31b) - Tragarm (8b;26b)-teil gegenüber dem dem Aufnehmer näher gelegenen Teil (8a;9a;26a;31a) auf diesen zu axial verschiebbar angeordnet und mit einem Verschiebeantrieb (11;30) versehen ist, und daß der zum Einschieben des Blocks (3) in die Aufnehmerbohrung vorgesehene Stößel (17;39;40) mit Antrieb (20;37;42;46) in dem dem Aufnehmer (5) abgewandten Ladeschalen (9b;31b)- und Tragarm (8b;26b)-teil gelagert und für einen um den zwischen den Ladeschalen (9a,9b;31a,31b)-und Tragarm (8a,8b;26a,26b)-teilen vorgesehenen Verschiebeweg gegenüber dem maximalen Ladehub verringerten Hub bemessen ist.

2. Vorrichtung nach Anspruch 1,
**gekennzeichnet durch**
die Verwendung von gabelartig mit gegeneinander versetzten Zinken (15a, 15b;32a,32b) und Lücken ausgebildeten Ladeschalenteilen (9a,9b;31a,31b), bei denen die Zinken 15a;32a) des einen (9a;31a) den Lücken zwischen den Zinken (15b;32b) des anderen Ladeschalenteils (9b;31b) gegenüberstehen und der Hub des Stößels (17;39,40) des Blockeinschiebers etwa gleich dem Verschiebeweg des mit dem Stößel (17;39,40) versehenen Ladeschalenteils (9b;31b) gegenüber dem unverschiebbaren Ladeschalenteil (9a;31a) bemessen ist.

3. Vorrichtung nach Anspruch 1 oder 2,
**dadurch gekennzeichnet,**
daß die Tragarm (8a,8b)- und Ladeschalen (9a,9b)-teile zur Pressenachse hin gegabelt sind und die Gabelöffnungen (16a,16b) zur Aufnahme des Stößels (17) mit Verschiebeantrieb (20) und für den Stößelhub bemessen sind.

4. Vorrichtung nach Anspruch 1 oder 2,
**dadurch gekennzeichnet,**
daß die Tragarmteile (26a,26b) mit einem Sektor der Ladeschalenteile (31a,31b) fest verbunden sind, und zu einer Seite des zweiten, gegen den ersten schwenkbaren Sektor (33a,33b) der Ladeschalenteile (31a,31b) und zur anderen Seite den Stößel (40) mit Verschiebeantrieb (42,46) tragen.

5. Vorrichtung nach einem der Ansprüche 1 bis 4,
**dadurch gekennzeichnet,**
daß als Stößel (39) der Shuttle (38) einer kolbenstangenlosen Kolben-Zylinder-Einheit (37) mit längsgeschlitztem, am Tragarm befestigten Zylinder dient.

6. Vorrichtung nach Anspruch 4,
**dadurch gekennzeichnet,**
daß als Stößel (40) ein mit einer Kröpfung (44) in den Verschiebebereich des Blocks (3) reichender, am Tragarmteil (26b) schwenkbar gelagerter Hebel dient.

7. Vorrichtung nach einem der Ansprüche 1 bis 4 oder 6,
**dadurch gekennzeichnet,**
daß die Stößelbewegung von der Verschiebebewegung des einen Ladeschalen (31b)-Tragarm (26b)-teils gegenüber dem anderen Ladeschalen (31a)-Tragarm (26a)-teil durch einen Koppeltrieb (41,45,46) zwischen dem Antrieb des Stößels (40) und dem unverschiebbaren Ladeschalen (31a)-Tragarm (26a)-teil abgeleitet ist.

## Claims

1. A device for loading billets (3) into horizontal metal extrusion presses, with a loading tray (9,31) which is supported by a movable arm (8, 26) and with which a billet (3) to be pressed can be brought from a loading station (furnace 2) onto the press axis between a receiver (5) and an extrusion die (23) or matrix die, and a pusher (17; 39; 40; 44) which pushes the billet (3) into the receiver borehole and which is mounted on the supporting arm (8; 26) together with its displacement drive (20; 37; 42; 46),
**characterised in that** the loading tray (9; 31) and the supporting arm (8; 26) are divided, and the parts of the loading tray (9b; 31b) and the supporting arm (8b; 26b) located further from the receiver (5) are arranged opposite the parts (8a; 9a; 26a; 31a) nearer the receiver (5) so as to be axially displaceable towards the latter parts, and are provided with a displacement drive (11; 30), and in that the pusher (17; 39; 40) provided for pushing the billet (3) into the receiver borehole is mounted together with its drive (20; 37; 42; 46) in the parts of the loading tray (9b; 31b) and supporting arm (8b; 26b) further from the receiver (5), and is designed to perform a stroke which falls short of the maximum loading stroke by the displacement path provided between the loading-tray parts (9a, 9b; 31a, 31b) and supporting-arm parts (8a, 8b; 26a, 26b).

2. A device according to Claim 1,
**characterised** by the use of loading-tray parts (9a, 9b; 31a, 31b) formed in a forked manner with prongs (15a, 15b; 32a, 32b) and gaps offset relative to one another, the prongs (15a; 32a) of one loading-tray part (9a; 31a) lying opposite the gaps between the prongs (15b; 32b) of the other loading-tray part (9b; 31b), and the stroke of the pusher (17; 39, 40) of the billet pusher corresponding approximately to the displacement path of the loading-tray part (9b; 31b) provided with the pusher (17; 39, 40) relative to the non-displaceable loading-tray part (9a; 31a).

3. A device according to Claim 1 or 2,
**characterised in that** the supporting-arm parts (8a, 8b) and loading-tray parts (9a, 9b) are forked towards the axis of the press, and the fork openings (16a, 16b) are designed to receive the pusher (17) with the displacement drive (20) and are proportioned to the pusher stroke.

4. A device according to Claim 1 or 2,
**characterised in that** the supporting-arm parts (26a, 26b) are connectedly firmly to one sector of the loading-tray parts (31a, 31b), and on one side support the second sector (33a, 33b) of the loading-tray parts (31a, 31b), which is pivotable towards the first sector, and on the other side support the pusher (40) with the displacement drive (42, 46).

5. A device according to any one of Claims 1 to 4,
**characterised in that** the shuttle (38) of a rodless piston-cylinder unit (37) serves as the pusher (39), this piston-cylinder unit (37) having a longitudinally slit cylinder fastened to the supporting arm.

6. A device according to Claim 4,
**characterised in that** a lever serves as the pusher (40), this lever having an offset (44) which extends into the displacement range of the billet (3) and being mounted pivotably on the supporting-arm part (26b).

7. A device according to any one of Claims 1 to 4 or 6,
**characterised in that** the pusher movement is derived from the displacement movement of one loading-tray part (31b) and supporting-arm part (26b) relative to the other loading-tray part (31 a) and supporting-arm part (26a) by a coupling drive (41, 45, 46) between the drive of the pusher (40) and the non-displaceable loading-tray part (31 a) and supporting-arm part (26a).

## Revendications

1. Appareil pour charger des blocs (3) dans des extrudeuses à métaux couchées, comprenant une coque de chargement (9, 31) portée par un bras mobile (8, 26) avec laquelle un bloc à extruder (3) peut être amené depuis une station de chargement (four 2) dans l'axe de la presse entre le récepteur (5) et le poinçon de presse (23) ou le poinçon de matriçage, et comprenant un poinçon (17; 39; 40; 44) qui introduit le bloc (3) dans le perçage récepteur et qui est monté, y compris son entraînement (20; 37; 42; 46), dans le bras porteur (8; 26),
caractérisé en ce que
la coque de chargement (9; 31) et le bras porteur (8; 26) sont subdivisés, en ce que la partie (8b; 26b) du bras porteur et la partie (9b; 31b) de la coque de chargement située la plus éloignée du récepteur (5) est agencée mobile axialement en direction de la partie (8a; 9a; 26a; 31a) située plus proche du récepteur, et est pourvue d'un entraînement de déplacement (11; 30); et en ce que le poinçon (17; 39; 40) prévu pour l'introduction du bloc (3) dans le perçage récepteur, est monté avec son entraînement (20; 37; 42; 46) dans la partie (9b; 31b) de la coque de chargement et celle (8b; 26b) du bras porteur éloigné du récepteur (5), et ce poinçon est dimensionné pour une course réduite entre la course de déplacement prévue entre les parties de coque de chargement (9a, 9b; 31a, 31b) et les parties de bras porteur (8a, 8b; 26a, 26b) par rapport à la course de chargement maximum.

2. Appareil selon la revendication 1, caractérisé par l'utilisation de parties (9a, 9b; 31a, 31 b) de coque de chargement réalisées à la manière de fourches avec des dents (15a, 15b; 32a, 32b) et d'intervalles décalés les uns par rapport aux autres, les dents (15a; 32a) d'une partie (9a; 31a) étant situées en face des intervalles entre les dents (15b; 32b) de l'autre partie (9b; 31b) de coque de chargement, et la course du poinçon (17; 39, 40) du dispositif d'introduction de blocs est dimensionnée de manière à peu près égale à la course de déplacement de la partie (9b; 31b) de coque de chargement pourvue du poinçon (17; 39, 40) par rapport à la partie (9a; 31a) immobile de la coque de chargement.

3. Appareil selon l'une ou l'autre des revendications 1 et 2, caractérisé en ce que les parties du bras porteur (8a, 8b) et de la coque de chargement (9a, 9b) sont fourchues en direction de l'axe de presse, et les ouvertures des fourches (16a, 16b) sont dimensionnées afin de recevoir le poinçon (17) avec son entraînement de déplacement (20) et pour la course du poinçon.

4. Appareil selon l'une ou l'autre des revendications 1 et 2, caractérisé en ce que les parties (26a, 26b) du bras porteur sont reliées solidairement à un secteur des parties (31a, 31b) de la coque de chargement, et portent le poinçon (40) avec son entraînement (42, 46) sur un côté du second secteur (33a, 33b), basculant par rapport au premier, des parties (31a, 31b) de la coque de chargement et sur l'autre côté.

5. Appareil selon l'une quelconque des revendications 1 à 4, caractérisé en ce que le tiroir (38) d'une unité (37) à piston-et-cylindre dépourvue de tige, avec un cylindre fendu longitudinalement et fixé sur le bras porteur, sert de poinçon (39).

6. Appareil selon la revendication 4, caractérisé en ce qu'un levier monté pivotant sur la partie (26b) du bras porteur et qui se projette au moyen d'un coude (44) dans la région de déplacement du bloc (3), sert de poinçon (40).

7. Appareil selon l'une quelconque des revendications 1 à 4 ou 6, caractérisé en ce que le déplacement du poinçon est dérivé du déplacement de l'une des parties de coque de chargement (31b) et du bras porteur (26b) par rapport à l'autre partie de coque de chargement (31 a) et du bras porteur (26a) par l'intermédiaire d'un accouplement (41, 45, 46) entre l'entraînement du poinçon (40) et la partie immobile de la coque de chargement (31a) et du bras porteur (26a).
